# EUROPEAN PATENT SPECIFICATION

(11) **EP 3 008 322 B1**
(45) Date of publication and mention of the grant of the patent: **09.03.2022**
(21) Application number: 13886826.0
(22) Date of filing: 14.06.2013
(51) Int. Cl.: F02K 1/12

(54) **VARIABLE-GEOMETRY EXHAUST NOZZLE FOR A JET ENGINE AND A METHOD FOR VARYING THE NOZZLE**
FORMVERÄNDERLICHE ABGASDÜSE FÜR EIN DÜSENTRIEBWERK UND VERFAHREN ZUR FORMÄNDERUNG DER DÜSE
TUYÈRE D'ÉJECTION À GÉOMÉTRIE VARIABLE POUR UN MOTEUR À RÉACTION ET PROCÉDÉ PERMETTANT DE MODIFIER LA TUYÈRE

(43) Date of publication of application: 20.04.2016
(73) Proprietor: SAAB AB, 581 88 Linköping (SE)
(72) Inventor: BJERKEMO, Jakob, S-582 53 Linköping (SE); RÄF, Martin, S-589 29 Linköping (SE)
(74) Representative: Zacco Sweden AB
(86) International application number: PCT/SE2013/050698
(87) International publication number: WO 2014/200403

(56) References cited:
- EP-A1- 0 622 538
- GB-A- 750 307
- GB-A- 984 925
- GB-A- 1 407 221
- US-A- 2 796 731
- US-A- 3 687 399
- US-A- 4 591 097
- US-A- 5 110 050
- US-A- 5 232 158
- US-A1- 2006 090 470

## Description

### TECHNICAL FIELD

The present invention relates to a variable-geometry exhaust nozzle for a jet engine according to the preamble of claim 1. The invention also relates to an aircraft comprising a variable-geometry exhaust nozzle and a method for varying a variable-geometry exhaust nozzle for a jet engine.

### TECHNICAL BACKGROUND

Jet engines are widely used to power aircraft. Jet engines provide propulsive power by generating a high velocity stream of gas which is exhausted rearwards through an exhaust nozzle. The optimum area of the exit of an exhaust nozzle depends on a variety of factors, such as the ambient conditions of temperature and pressure, and the mass flow of exhaust gas, which depends on the operating condition of the engine. In jet engines, in particular, engines having some sort of thrust augmentation such as an afterburner, it is desirable to cause a variation of the nozzle flow exit area to maintain high engine performance under a wide range of operating conditions. For example, during takeoff, when the power requirement of the engine is greater than at cruise, the optimum nozzle exit area is greater than it is at cruise and may increase during climb.

One means for varying the nozzle exit area is a variable-geometry exhaust nozzle. A variable-geometry exhaust nozzle comprises flaps movable between a first position, wherein they together define a minimum nozzle exit area for cruise and other low power modes, and a second position, wherein they together define a maximum nozzle exit area for takeoff and other high power modes.

One problem associated with variable-geometry exhaust nozzles is that the displacement of a movable flap will result in gaps between the flap and its adjacent flaps. If the variable-geometry exhaust nozzle is used as an outer exhaust nozzle enclosing an inner exhaust nozzle these gaps will allow leakage of cooling air arranged between the inner exhaust nozzle and the outer exhaust nozzle. If the variable-geometry exhaust nozzle is used as a single exhaust nozzle or as an inner exhaust nozzle enclosed by an outer exhaust nozzle said gaps will allow leakage of the exhaust gas, which generates vortices and so reduces the nozzles efficiency and accordingly the performance of the jet engine. The leakage of cooling air will also decrease the nozzles efficiency and accordingly decrease the performance of the jet engine.

An example of a known exhaust nozzle is disclosed in document US-A1-4591097. US-A1-4591097 discloses an improved thrust reverser/exhaust nozzle assembly that has a plurality of blocker devices located in a so called divergent section of the exhaust nozzle and a plurality of deflector devices located in a so called convergent section of the nozzle. The blocker and deflector devices are linked together such that they move simultaneously and maintain a substantially constant engine flow rate during transitions of the engine between forward and reverse thrust conditions. The exhaust nozzle assembly comprises flaps and these flaps are only in contact with each other when the flaps are in a fully closed position. When the flaps are not in a fully closed position there are gaps between the flaps. Two other prior art variable exhaust nozzles for jet engines are disclosed by documents US3687399A and US5232158A.

Variable-geometry nozzles are complex in structure because they comprise many components that move relative to each other. This makes variable-geometry nozzles expensive to design, manufacture, maintain and operate.

As a consequence, in light of the above drawbacks, there is a need of an improved variable-geometry exhaust nozzle for a jet engine with increased nozzle efficiency and that is less expensive to design, manufacture, maintain and operate.

One object is to reduce the noise from the variable-geometry nozzle.

One further object is to provide a failure safe variable-geometry nozzle.

Another object is to provide a variable-geometry nozzle with a cross section that will assume the same shape in each of said positions.

The foregoing and other objects and advantages of the present invention will be apparent to those skilled in the art, in view of the following detailed description, taken in conjunction with the appended claims and the accompanying drawings.

### SUMMARY OF THE INVENTION

This has been solved by the variable-geometry exhaust nozzle for a jet engine according to the characterizing features of claim 1.

This has also been solved by the aircraft comprising a variable-geometry exhaust nozzle according to claim 13 and the method for varying a variable-geometry exhaust nozzle for a jet engine according to the steps of claim 14.

Suitably the variable-geometry exhaust nozzle for a jet engine comprises a fixed structure, a plurality of flap means being pivotally connected to the fixed structure and actuator means being arranged to actuate said flap means for variation of the nozzles cross sectional area, i.e. the area inside the nozzle defined by said flap means, between a first position and a second position. The respective flap means comprises first flap means and second flap means each comprising a sliding surface arranged in continuous contact with adjacent flap means during said variation. In this context "continuous contact" is defined by that the first flap means and the second flap means are in contact with each other in every position between the first position and the second position. The first position may be a maximum position and the second position may be a minimum position.

Thereby no gaps will occur between a flap means and its adjacent flap means during said variation. The variable-geometry exhaust nozzle can be used as a single exhaust nozzle, as an inner exhaust nozzle enclosed by an outer exhaust nozzle or as an outer exhaust nozzle enclosing an inner exhaust nozzle. If the variable-geometry exhaust nozzle is used as a single exhaust nozzle, or as an inner exhaust nozzle, the fact that no gaps will occur between the flap means and its adjacent flap means, during said variation, will prevent leakage of exhaust gas. If the variable-geometry exhaust nozzle is used as an outer exhaust nozzle enclosing an inner exhaust nozzle, the fact that no gaps will occur between the flap means and its adjacent flap means (during said variation) will prevent leakage of cooling air arranged between the inner exhaust nozzle and the outer exhaust nozzle. The prevention of leakage of exhaust gas and cooling air will increase the nozzles efficiency and accordingly increase the performance of the jet engine. The jet engines energy consumption and the noise from the variable-geometry exhaust nozzle are also reduced.

The first flap means is arranged to be in said continuous contact with an adjacent second flap means such that the first flap means, within an area defined by said sliding surface, overlies the second flap means. In this context "overlies" is defined by that the first flap means is arranged in an outer periphery of the variable-geometry exhaust nozzle and abuts the second flap means being arranged in an inner periphery of the variable-geometry exhaust nozzle. The distance between the outer and inner periphery in radial direction may preferably be defined as half the thickness of a sheet metal of first flap means plus half the thickness of a sheet metal of second flap means. Preferably, each imaginary periphery line is thus defined as extending centrally in each flap means sheet metal and parallel with its plane.

This will further reduce the risk of gaps between a flap means and its adjacent flap means during said variation because the first flap means are overlying the second flap means and are counteracting the force from the jet stream. This will in turn further prevent leakage of exhaust gas and cooling air and in turn further increase the nozzles efficiency and the performance of the jet engine. Thereby a sealing between the first and second flap means is provided.

Preferably, the first flap means is being constituted of said actuator means.

The force from the first flap means acting on the second flap means counteracts the jet stream force acting on said second flap means. Thus, providing an operationally reliable variable-geometry exhaust nozzle of rigid and simple design capable of variation to any desired intermediate setting between the first and second position.

Preferably, the actuator means comprises bent sheet metal (angled).

Suitably, the number of the first flap means is equal to the number of the second flap means.

Thus a first flap mean will always overlie two adjacent second flap means and thereby further reduce the risk of gaps between a flap means and its adjacent flap means during said variation. This will further prevent leakage of exhaust gas and cooling air, which in turn will increase the nozzles efficiency and accordingly increase the performance of the jet engine.

In another aspect of the invention the actuator means comprises an elongated actuator. In a further aspect of the invention the elongated actuator is a hydraul.

Suitably, the hydraul is cost-effective connected to the hydraulic system of the jet engine.

In yet another aspect of the invention said actuator means comprises two sliding surfaces, which are angularly arranged to each other with an angle α. The angle α being defined in a plane extending essentially parallel with said cross sectional area. The angle α may also be defined as an angle between two imaginary lines, each of which lies in a plane orthogonally oriented relative the sliding surfaces.

In such way the variable-geometry exhaust nozzles cross section will assume the same shape in each of said every position. In turn, the flow of exhaust gases through the exhaust nozzle is being optimized and the noise from the variable-geometry nozzle is reduced.

In another aspect of the invention said angle α is about 120°.

Thus providing a variable-geometry nozzle that is less complex in structure because it comprises few components that move relative to each other. In turn this makes the variable-geometry nozzle less expensive to design, manufacture, maintain and operate.

In a further aspect of the invention the flap means comprises resilient material. The resilient material makes the flap means able to bend and capable of regaining their original shape after bending and thereby seals said sliding surfaces to each other. This reduces the risk of gaps between the flap means during said variation. Thus further preventing leakage of the exhaust gas and cooling air and in turn further increase the nozzles efficiency and the performance of the jet engine. Also the noise from the variable-geometry nozzle is reduced.

In yet another aspect of the invention said flap means is pivotally connected to the fixed structure with hinge means. Hinge means arranged pivotally about axes extending in a plane essentially parallel with said cross sectional area.

Said hinge means permits an angle of rotation between said flap means and the fixed structure, which allows for variation of the nozzles cross sectional area between a first position and a second position. Thus providing an operationally reliable variable-geometry exhaust nozzle of rigid and simple design that is cost effective to manufacture and easy to maintain.

In another aspect of the invention a sealing is arranged between the first flap means and the second flap means for sealing said sliding surfaces.

This reduces the risk of gaps between the flap means during said variation. Thus further preventing leakage of exhaust gas and cooling air and in turn further increase the nozzles efficiency and the performance of the jet engine. Also the noise from the variable-geometry nozzle is reduced.

In a further aspect of the invention said downstream edges form a common exhaust nozzle downstream edge, which is toothed in said second position.

This gives the exhaust nozzle downstream edge a more aerodynamic shape and in turn reduces the aerodynamic noise from the variable-geometry exhaust nozzle.

In yet another aspect of the invention a downstream edge of the exhaust nozzle forming said area is symmetric.

Thereby it is easier to integrate two jet engines in an aircraft.

The variable-geometry convergent-divergent exhaust nozzle according to the invention can also constitute a nozzle for reducing infra-red or radar cross section signature of the nozzle. Other objectives, embodiments and advantages of the present invention are described in closer detail in the description and in the subsequent patent claims. The scope of the invention is defined in the appended claims.

### BRIEF DESCRIPTION OF THE DRAWINGS

The invention will hereinafter be described with reference to embodiments of the present invention and the accompanying schematic drawings, in which:
- Fig. 1: shows a side view of a jet engine comprising a variable-geometry exhaust nozzle according to one aspect of the present invention,
- Fig. 2: shows a perspective view of a variable-geometry exhaust nozzle in a first embodiment and in a first position according to one aspect of the present invention,
- Fig. 3: shows a perspective view of a variable-geometry exhaust nozzle in a first embodiment and in a second position according to one aspect of the present invention,
- Fig. 4: shows a perspective view of a variable-geometry exhaust nozzle in a second embodiment and in a first position according to one aspect of the present invention,
- Fig. 5: shows a perspective view of a variable-geometry exhaust nozzle in a third embodiment and in a second position according to one aspect of the present invention,
- Figs. 6a-f: shows a cross-sectional view of a variable-geometry exhaust nozzle according to different aspects of the present invention,
- Figs. 7a-g: show cross-sectional views of variable-geometry exhaust nozzles according to different aspects of the present invention,
- Figs. 8a-8c: shows an enlarged view of a variable-geometry exhaust nozzle according to one aspect of the present invention, in cross-section A-A from fig. 2,
- Fig. 9: shows a variable-geometry exhaust nozzle according to one aspect of the present invention integrated in an airframe,
- Fig. 10: shows a variable-geometry exhaust nozzle according to one aspect of the present invention enclosing an inner exhaust nozzle, and
- Figs. 11a-b: shows flow charts of a method for varying a variable-geometry exhaust nozzle for a jet engine according to the present invention.

### DETAILED DESCRIPTION OF THE INVENTION

Hereinafter, embodiments of the present invention will be described in detail by means of examples with reference to the accompanying drawings, wherein for the sake of clarity and understanding of the invention some details of no importance are deleted from the drawings. The same reference numbers may have been used for the same or similar features throughout the description of the embodiments disclosed below.

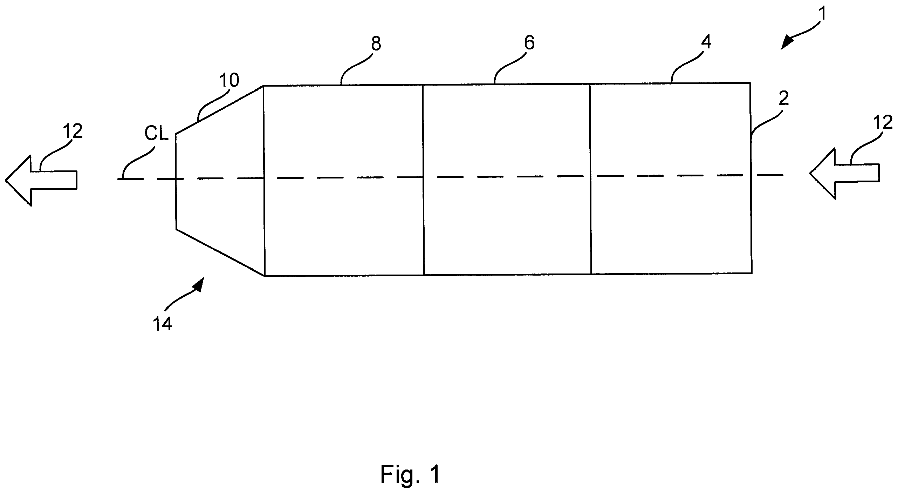

Fig. 1 shows a jet engine 1 comprising an air inlet 2, a compressor section 4, a combustion section 6, a turbine section 8 and possible afterburner section and an exhaust section 10. Air 12 entering the jet engine 1 through the air inlet 2, being compressed when passing through the compressor section 4. The air 12 is heated for power generating functionality in the combustion section 6. It thereafter passes through the turbine section 8 in a power extraction function and is finally exhausted through the exhaust section 10. The exhaust section 10 comprises the variable-geometry exhaust nozzle 14 according to one aspect of the present invention.

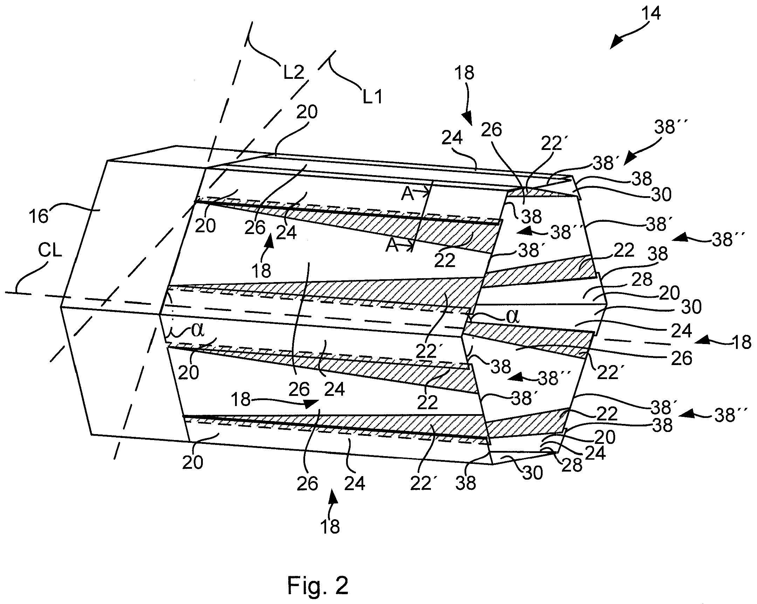

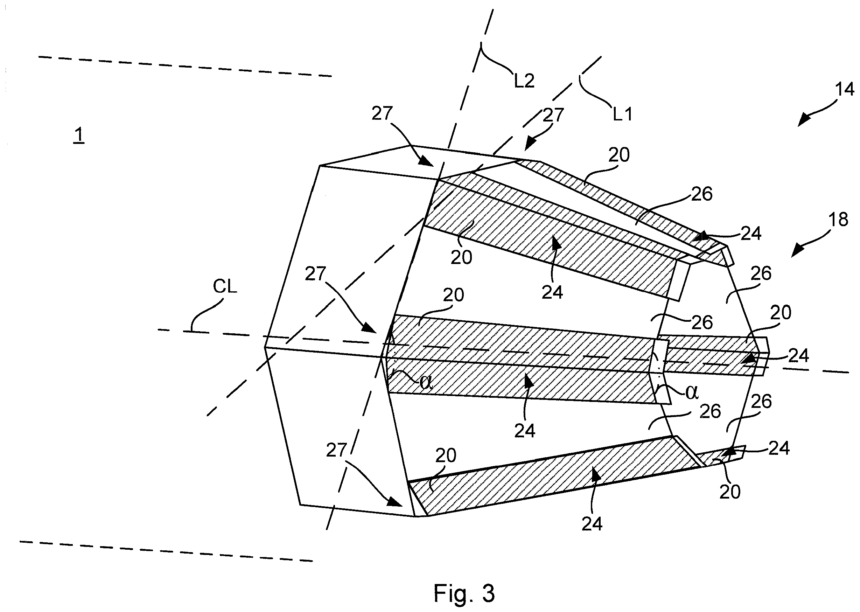

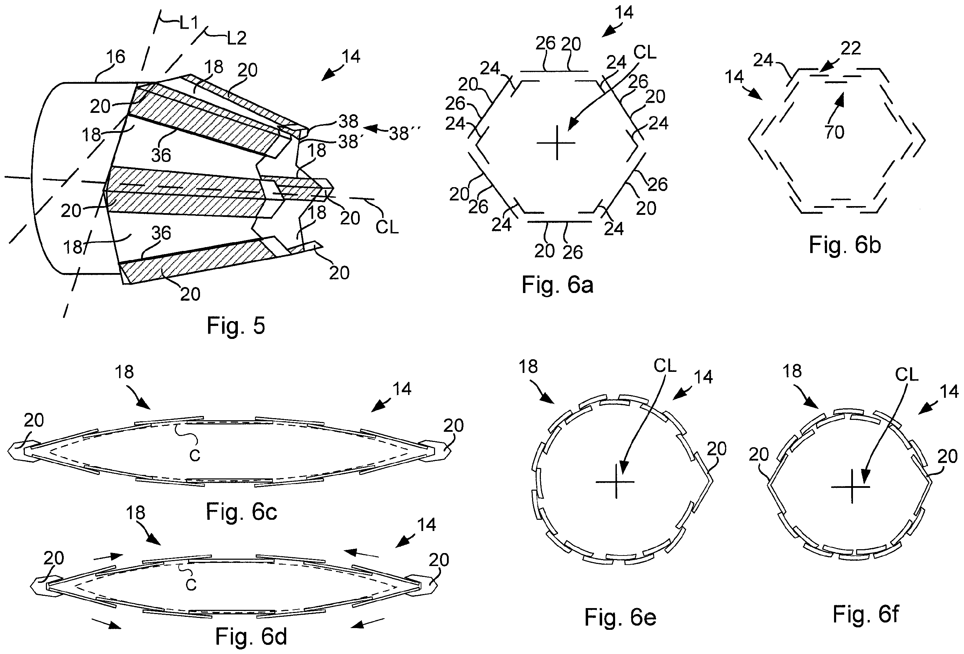

Fig. 2 shows a perspective view of a variable-geometry exhaust nozzle 14 according to a first embodiment and in a first position. The variable-geometry exhaust nozzle 14 will be described with reference to both fig. 2 and fig. 3, which figures show a perspective view of a variable-geometry exhaust nozzle 14 according to the first embodiment and in a first and second position respectively. The variable-geometry exhaust nozzle 14 for a jet engine 1 comprises a fixed structure 16 with a hexagonal shape. The fixed structure 16 can have other shapes as well, for example a squared, round (as shown in fig. 5) or pentagonal shape.

The variable-geometry exhaust nozzle 16 further comprises a plurality of flap means 18, which are circumferentially arranged about and extending along a central axis CL of the fixed structure 16 and being pivotally connected (hinged) to the fixed structure 16, and actuator means 20 (in this embodiment angled sheet metal controlled by hy-drauls) (bent elongated sheet metal forming actuate or obtuse angle seen in a plane transverse said elongation) being arranged to actuate said flap means 18 for variation of the nozzles 14 cross sectional area between the first position and the second position. The actuator means 20 is arranged to operate all flap means 18 simultaneously. The flap means 18 are individually adjustable in angular position with respect to the fixed structure 16 by rotation of each first flap means 24 about an axis L1 and by rotation of each second flap means 26 about an axis L2. The flap means 18 defines a maximum exhaust area for takeoff and other high power modes in the first position and a minimum exhaust area for cruise and other low power modes in the second position.

Said flap means 18, 24, 26 is pivotally connected to the fixed structure with hinge means 27 as is shown in fig. 3. The flap means comprises resilient material. For example, the flap means 18 comprise ceramic material, steel, aluminium, titanium, nickel alloy or other materials which is flexible enough to permit the flap means 18 to flex when the variable-geometry exhaust nozzle 14 is adjusted between the first and the second position. The jet stream of the jet engine 1 during use tends to press the flap means 26 radially outwardly. The flap means 26 is therefore also sufficiently stiff to resist pressure loads from the jet engines 1 jet stream during use (if the variable-geometry exhaust nozzle 14 is used as a single exhaust nozzle or as an inner exhaust nozzle). The flap means 18, 24, 26 is also sufficiently stiff to resist pressure loads applied by cooling air arranged between the inner exhaust nozzle and the outer exhaust nozzle (if the variable-geometry exhaust nozzle 14 is used as an outer exhaust nozzle). Preferably, the flap means 18 also comprises heat-resistant material due to that the flap means 18 is subjected to high heat from the jet engines 1 jet stream.

The respective flap means 18 comprises first flap means 24 and second flap means 26 each comprising a sliding surface 22, 22' arranged in continuous contact with adjacent flap means 18 during said variation. The first flap means 24 is arranged to be in said continuous contact with the adjacent second flap means 26 such that the first flap means 24, within an area defined by said sliding surface 22, 22', overlies the second flap means 26. The number of first flap means 24 is preferably equal to the number of second flap means 26. Preferably, the number of first flap means 24 is six and the number of second flap means 26 is six. The first flap means 24 of the variable-geometry nozzle 14 is being constituted of said actuator means 20. The second flap means 26 is pressed outwardly against the first flap means 24 during use. Said actuator means 20 comprises two sliding surfaces 28, 30, which are angularly arranged to each other with an angle α (shown in fig. 2 and fig. 3). Said angle α is preferably about 120°. Thereby giving the variable-geometry exhaust nozzle 14 a hexagonal cross section. A hexagonal shape of the cross section is a more aerodynamic shape and reduces the aerodynamic noise from the variable-geometry exhaust nozzle 14.

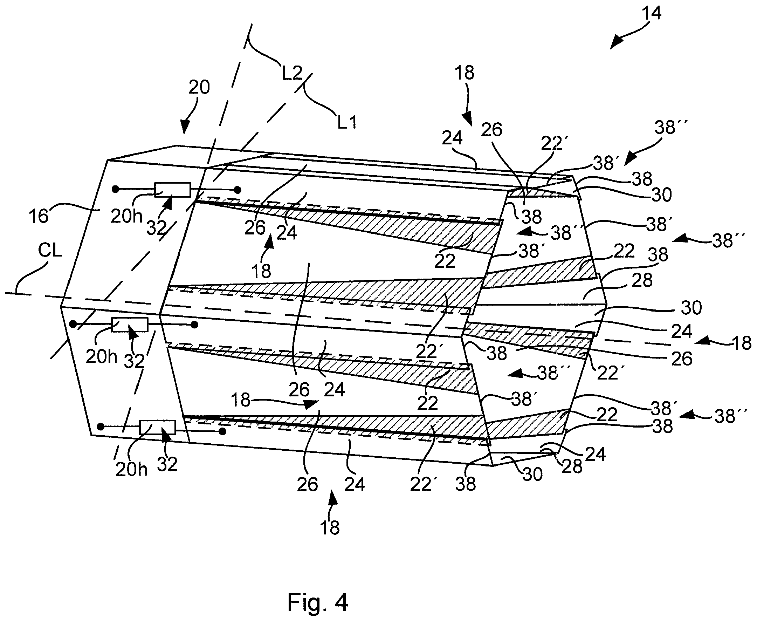

Fig. 4 shows a perspective view of a variable-geometry nozzle 14 in a second embodiment and in a first position. The first embodiment and the second embodiment of the variable-geometry exhaust nozzle 14 is the same except from that the actuator means 20h of the variable-geometry exhaust nozzle14 in the second embodiment comprises an elongated actuator 32, in this embodiment a hydraul.

Embodiments described in figs. 2-4 do not comprise additional sealing elements (see fig. 5).

Fig. 5 shows a perspective view of a variable-geometry exhaust nozzle 14 according to a third embodiment and in a second position. The third embodiment of the variable-geometry nozzle 14 is the same as the first and second embodiment of the variable-geometry nozzle 14 except from that the variable-geometry exhaust nozzle 14 comprises downstream edges 38, 38' that form a common exhaust nozzle downstream edge 38", which is toothed in said second position, and except from that the fixed structure 16 has a round shape and that the variable-geometry exhaust nozzle 14 comprises a sealing 36 arranged between the first flap means 24 and the second flap means 26 for sealing said sliding surfaces 22, 22' thus making the variable-geometry exhaust nozzle 14 less leak prone. The common exhaust nozzle downstream edge 38‴which is toothed gives the exhaust nozzle downstream edge a more aerodynamic shape and in turn reduces the aerodynamic noise from the variable-geometry exhaust nozzle.

Fig. 6a shows a cross-sectional view of a variable-geometry exhaust nozzle in a fourth embodiment according to the present invention. The fourth embodiment of the variable-geometry exhaust nozzle 14 is the same as the first, second or third embodiment of the variable-geometry exhaust nozzle 14 except from that the second flap means 26 are overlying the first flap means 24 and are being constituted of said actuator means 20. The advantage with the fourth embodiment is that the second flap means 26 has a longer hinge line than the first flap means 24 thus providing a variable-geometry nozzle 14 of a more stable design. Fig. 6b shows a cross-sectional view of a variable-geometry exhaust nozzle according to another aspect of the present invention. It is possible for the nozzle 14 to comprise additional flap means 70.

Figs. 6 c-d show a cross-sectional view of a variable-geometry exhaust nozzle 14 according to another aspect of the present invention. Fig. 6c shows the nozzle 14 in the first position and fig. 6d shows the nozzle 14 in the second position. The nozzle 14 is lenticular and comprises two corners. The nozzle 14 maintains its curvature C (and thereby its geometric shape) during said variation between the first and second position. The actuator means 20 comprises an elongated block shaped arm exhibiting towards each other angled surfaces acting as the sliding surfaces.

Figs. 6 e-f show a cross sectional view of a variable-geometry exhaust nozzle 14 according to other aspects of the invention. Fig. 6e shows a circular nozzle 14 with one angled actuator means 20 and fig. 6f shows a circular nozzle 14 with two angled actuator means 20. CL is the centre line. The nozzle 14 maintains its geometric shape during said variation between the first and second position. Preferably, the actuator means 20 overlies the adjacent flap means 18 (see fig. 6e). But it is also possible for the adjacent flap means 18 to overlie the actuator means 20 (see fig. 6f).

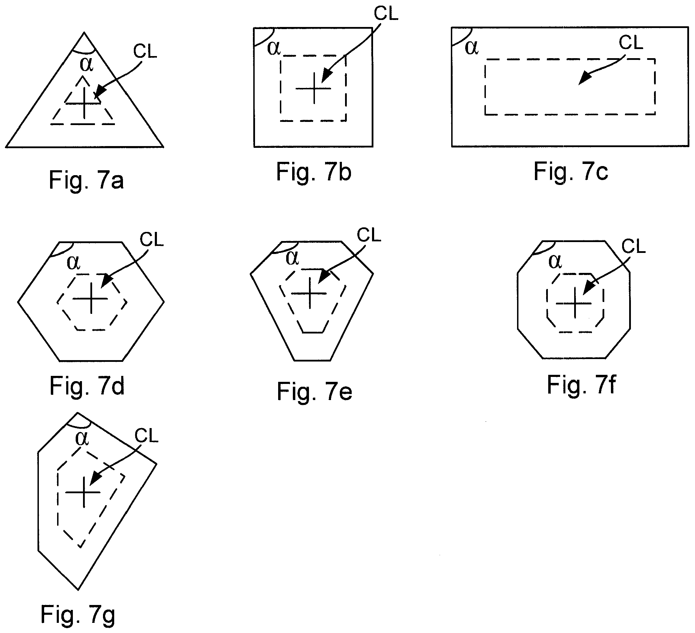

Fig. 7a shows a cross-sectional view of a variable-geometry exhaust nozzle 14 in a fifth embodiment according to the present invention. Fig. 7b shows a cross sectional view of a variable-geometry exhaust nozzle 14 in a sixth embodiment according to the present invention. Fig. 7c shows a cross-sectional view of a variable-geometry exhaust nozzle 14 in a seventh embodiment according to the present invention. Fig. 7d shows a cross-sectional view of a variable-geometry exhaust nozzle 14 in the first, second, third and fourth embodiment according to the present invention. Fig. 7e shows a cross-sectional view of a variable-geometry exhaust nozzle 14 in an eight embodiment according to the present invention. Fig. 7f shows a cross-sectional view of a variable-geometry exhaust nozzle 14 in a ninth embodiment according to the present invention. Fig. 7g shows a cross-sectional view of a variable-geometry exhaust nozzle 14 in a tenth embodiment according to the present invention.

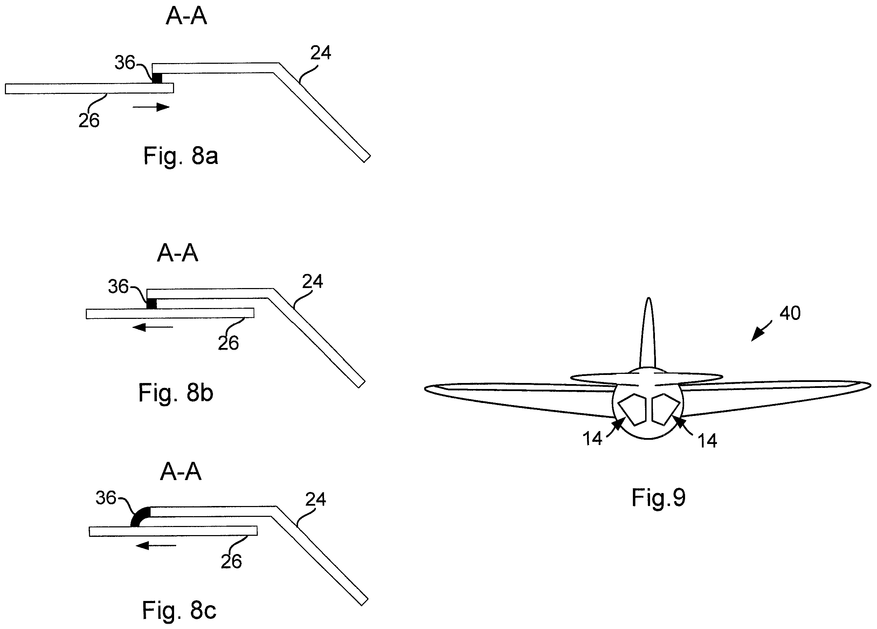

The variable-geometry exhaust nozzles 14 cross section in fig. 7a is triangular, symmetric and has equal angles α, the cross section in fig 7b is squared, symmetric and has equal angles α, the cross section in fig. 7c is rectangular, symmetric and has equal angles α, the cross section in fig. 7d is hexagonal, symmetric and has equal angles α, the cross section in fig. 7e is hexagonal, symmetric and do not have equal angles α, the cross section in fig. 7f is octagonal, symmetric and has equal angles α, and the cross section in fig. 7g is pentagonal and asymmetric. Said first position is shown in solid lines and said second position is shown in dashed lines. It is possible for the variable-geometry exhaust nozzles 14 cross section to have any desired shape thus providing a variable-geometry exhaust nozzle 14 that is easy to integrate in an airframe 40 (shown in fig. 9). Thereby it is not needed to adapt the design of the airframe 40 to the shape of the variable-geometry exhaust nozzle 14.

Fig. 8a - 8c shows an enlarged view of a variable-geometry exhaust nozzle 14 according to one aspect and in cross-section A-A from fig. 2. Fig. 8a shows the variable-geometry exhaust nozzle 14 in the first position. Fig. 8b and 8c shows the variable-geometry exhaust nozzle 14 in the second position. The arrows show the first flap means 24 and the second flap means 26 direction of movement. As described before the variable-geometry exhaust nozzle 14 can comprises a sealing 36 arranged between the first flap means 24 and the second flap means 26 thus making the variable-geometry exhaust nozzle 14 less leak prone. The sealing 36 is preferably attached to the first flap means 24 or integrated with the first flap means 24 and is sliding along the surface of the second flap means 26. Preferably, the sealing 36 comprise ceramic material thus providing a heat resistant and wear resistant sealing 36. The sealing 36 in fig. 8c is arcuated. It is possible for the sealing 36 shown in fig. 8a and 8b to be moveably arranged between the first flap means 24 and the second flap means 26.

Fig. 9 shows two variable-geometry exhaust nozzles 14 according to one aspect integrated in an airframe 40.

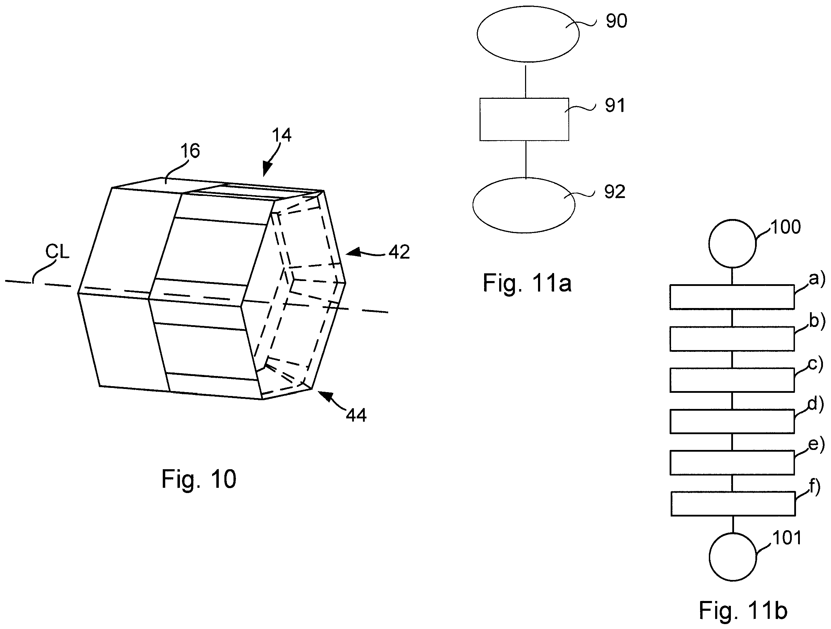

Fig. 10 shows a variable-geometry exhaust nozzle 14 according to one aspect enclosing an inner exhaust nozzle 42. The variable-geometry exhaust nozzle 14 and the inner nozzle 42 are in this embodiment attached to each other with hinge means 44. It is also possible to not attach them to each other and instead slidingly arrange them to each other.

Fig. 11a illustrates a flow chart of a method for varying a variable-geometry exhaust nozzle 14 for a jet engine 1, according to one aspect of the invention. The method starts in Step 90. In Step 91 is provided a method varying a variable-geometry exhaust nozzle 14 for a jet engine 1. In Step 92 the method is fulfilled. According to an aspect of the disclosure, the method for varying a variable exhaust nozzle 14 for a jet engine 1, comprises the steps:
a) providing a plurality of flap means 18,
b) actuating said flap means 18 for variation of the nozzles 14 cross sectional area between a first position and a second position by means of actuator means 20, 32, 20h, the cross sectional area being the area inside the nozzle defined by said flap means 18, wherein each actuator means 20 comprises two sliding surfaces 28, 30, which are angularly arranged to each other with an angle α, and wherein said cross sectional area is hexagonal or pentagonal and asymmetric, or squared, symmetric and has equal angles, or rectangular, symmetric and has equal angles, or triangular, symmetric and has equal angles,
c) providing a continuous contact between adjacent flap means 18 via a sliding surface 22, 22' of respective flap means 18 during said variation, such that a first flap means 24 always will overlie two adjacent second flap means 26.

According to a preferred embodiment, the method further comprises the step:
d) actuating a first flap means 24 of the flap means 18 by means of the actuator means 20 to provide said variation.

According to a preferred embodiment, the method further comprises the steps:
e) providing an inner surface on a second flap means 26,
f) actuating said second flap means 26 by means of a counteracting jet stream force from the jet engine 1 during use.

According to a preferred embodiment, the step b) is being performed by the first flap means 24 that overlies the second flap means 26, wherein the first flap means 24 are acting on the second flap means 26.

Fig. 11b shows a flow chart of the method for varying a variable-geometry exhaust nozzle 14 for a jet engine 1 according to an embodiment not part of the claimed invention. The method comprises the steps of: 100) Starting of the method.
a) Providing a plurality of flap means 18 (as described in previous figures) by arranging the flap means 18 to the fixed structure via hinges.
b) Actuating said flap means 18 for variation of the nozzles 14 cross sectional area between a first position and a second position by means of an actuator means 20 (as described in previous figures), wherein the respective flap means 18 comprises first flap means 24 and second flap means 26. The first flap means 24 overlies and acts on the second flap means 26. The flap means is made of sheet metal. The actuator means 20 comprises a hydraul.
c) Providing a sliding surface 22, 22' (as described in previous figures) on each flap means 18 to provide a continuous contact by means of said sliding surfaces 22, 22' during said variation.
d) Actuating a first flap means 24 of the flap means 18 by means of the actuator means 20 to provide said variation.
e) Providing an inner surface on a second flap means 26.
f) Actuating said second flap means 26 by means of a counteracting jet stream force from the jet engine 1 during use.

### 101) Stopping of the method.

It is possible for one hydraul to actuate one flap means. It is also possible for one hydraul to actuate two or more flap means. The elongated actuator can also comprise a pneumatic actuator. It is also possible for the actuator means to comprise an electric engine or be cable-operated. The rotation of all flap means occurs at the same time, i.e. synchronously. Preferably, all flap means rotate with the same angular velocity. But it is also possible for the flap means to not rotate with the same angular velocity, for example for asymmetric nozzles. The actuator means in the form of an angled flap does not need to be metal sheet. It can be of forgings, ceramic, steel, aluminium, titanium, nickel or alloy as well. The actuator means can also comprise an elongated block shaped arm exhibiting towards each other angled surfaces acting as the sliding surfaces.

## Claims

1. A variable exhaust nozzle (14) for a jet engine (1), comprising a fixed structure (16), a plurality of flap means (18) circumferentially arranged about and extending along a central axis of the fixed structure (16) and being pivotally connectable to the fixed structure (16), and actuator means (20, 20h) being arranged to actuate said flap means (18) for variation of the nozzles (14) cross sectional area between a first position and a second position, the cross sectional area being the area inside the nozzle defined by said flap means (18),
the respective flap means (18) comprises first flap means (24) and second flap means (26) each comprising a sliding surface (22, 22') arranged in continuous contact with adjacent flap means (18) during said variation, such that a first flap means (24) always will overlie two adjacent second flap means (26),
each actuator means (20) comprises two sliding surfaces (28, 30), which are angularly arranged to each other with an angle (α),
**characterized in that** said cross sectional area is
hexagonal or
pentagonal and asymmetric, or
squared, symmetric and has equal angles, or
rectangular, symmetric and has equal angles, or
triangular, symmetric and has equal angles.

2. The nozzle (14) according to claim 1, **characterized in that** a first flap means (24) is arranged to be in said continuous contact with an adjacent second flap means (26) such that the first flap means (24), within an area defined by said sliding surface (22, 22'), overlies the second flap means (26).

3. The nozzle (14) according to claim 1 or 2, **characterized in that** the first flap means (24) is being constituted of said actuator means (20).

4. The nozzle (14) according to claim 1, **characterized in that** said angle (α) is about 120°.

5. The nozzle (14) according to any of the above claims, **characterized in that** the number of the first flap means (24) is equal to the number of the second flap means (26).

6. The nozzle (14) according to any of the above claims, **characterized in that** the actuator means (20) comprises an elongated actuator (32).

7. The nozzle (14) according to claim 6, **characterized in that** the elongated actuator (32) is a hydraul.

8. The nozzle (14) according to any of the above claims, **characterized in that** the flaps means (18, 24, 26) comprises resilient material.

9. The nozzle (14) according to any of the above claims, **characterized in that** said flap means (18, 24, 26) is pivotally connectable to the fixed structure with hinge means.

10. The nozzle (14) according to any of the above claims, **characterized in that** further comprising a sealing (36) arranged between the first flap means (24) and the second flap means (26) for sealing said sliding surfaces (22, 22').

11. The nozzle (14) according to any of the above claims, **characterized in that** the variable exhaust nozzle (14) comprises downstream edges (38, 38') that form a common exhaust nozzle downstream edge (38"), which is toothed in said second position.

12. The nozzle (14) according to any of the above claims, **characterized in that** a downstream edge (38‴) of the exhaust nozzle (14) forming said area is symmetric.

13. An aircraft comprising a variable exhaust nozzle (14) according to claim 1.

14. A method for varying a variable exhaust nozzle (14) for a jet engine (1), comprising the steps:
a) providing a plurality of flap means (18),
b) actuating said flap means (18) for variation of the nozzles (14) cross sectional area between a first position and a second position by means of actuator means (20, 32, 20h), the cross sectional area being the area inside the nozzle defined by said flap means (18), wherein each actuator means (20) comprises two sliding surfaces (28, 30), which are angularly arranged to each other with an angle (α), and wherein said cross sectional area is
hexagonal or
pentagonal and asymmetric, or
squared, symmetric and has equal angles, or
rectangular, symmetric and has equal angles, or
triangular, symmetric and has equal angles,
c) providing a continuous contact between adjacent flap means (18) via a sliding surface (22, 22') of respective flap means (18) during said variation, such that a first flap means (24) always will overlie two adjacent second flap means (26).

15. The method according to claim 14, further comprising the step:
d) actuating a first flap means (24) of the flap means (18) by means of the actuator means (20) to provide said variation.

16. The method according to claim 14 or 15, further comprising the steps:
e) providing an inner surface on a second flap means (26),
f) actuating said second flap means (26) by means of a counteracting jet stream force from the jet engine (1) during use.

17. The method according to any of claims 14-16, wherein the step b) is being performed by the first flap means (24) that overlies the second flap means (26), wherein the first flap means (24) are acting on the second flap means (26).

## Patentansprüche

1. Variierbare Abgasdüse (14) für ein Düsentriebwerk (1), die eine feste Struktur (16) umfasst, eine Vielzahl von Klappeneinrichtungen (18), die in Umfangsrichtung um eine Mittelachse der festen Struktur (16) herum angeordnet sind und sich entlang dieser erstrecken und schwenkbar mit der festen Struktur (16) verbindbar sind, und Betätigungseinrichtungen (20, 20h), die angeordnet sind zum Betätigen der Klappeneinrichtungen (18) zum Variieren der Querschnittsfläche der Düsen (14) zwischen einer ersten Position und einer zweiten Position, wobei die Querschnittsfläche die Fläche innerhalb der Düse ist, die durch die Klappeneinrichtungen (18) definiert ist,
wobei die jeweiligen Klappeneinrichtungen (18) erste Klappeneinrichtungen (24) und zweite Klappeneinrichtungen (26) umfassen, die jeweils eine Gleitfläche (22, 22') umfassen, die in kontinuierlichem Kontakt mit benachbarten Klappeneinrichtungen (18) während dem Variieren angeordnet sind, so dass erste Klappeneinrichtungen (24) stets zwei benachbarte zweiten Klappeneinrichtungen (26) überlagern, wobei jede Betätigungseinrichtung (20) zwei Gleitflächen (28, 30) umfasst, die winklig zueinander unter einem Winkel (a) angeordnet sind,
**dadurch gekennzeichnet, dass** der Querschnittsbereich
sechseckig oder
fünfeckig und asymmetrisch oder
quadratisch, symmetrisch und mit gleichen Winkeln oder
rechteckig, symmetrisch und mit gleichen Winkeln oder
dreieckig, symmetrisch ist und gleiche Winkeln aufweist.

2. Düse (14) nach Anspruch 1, **dadurch gekennzeichnet, dass** erste Klappeneinrichtungen (24) so angeordnet sind, dass sie in kontinuierlichem Kontakt mit benachbarten zweiten Klappeneinrichtungen (26) stehen, so dass die ersten Klappeneinrichtungen (24) innerhalb eines durch die Gleitfläche (22, 22') definierten Bereichs die zweiten Klappeneinrichtungen (26) überlagern.

3. Düse (14) nach Anspruch 1 oder 2, **dadurch gekennzeichnet, dass** die ersten Klappeneinrichtungen (24) aus den Betätigungseinrichtungen (20) gebildet sind.

4. Düse (14) nach Anspruch 1, **dadurch gekennzeichnet, dass** der Winkel (a) etwa 120° beträgt.

5. Düse (14) nach einem der vorgehenden Ansprüche, **dadurch gekennzeichnet, dass** die Anzahl der ersten Klappeneinrichtungen (24) gleich der Anzahl der zweiten Klappeneinrichtungen (26) ist.

6. Düse (14) nach einem der vorgehenden Ansprüche, **dadurch gekennzeichnet, dass** die Betätigungseinrichtungen (20) einen länglichen Aktuator (32) umfassen.

7. Düse (14) nach Anspruch 6, **dadurch gekennzeichnet, dass** der längliche Aktuator (32) eine Hydraulik ist.

8. Düse (14) nach einem der vorgehenden Ansprüche, **dadurch gekennzeichnet, dass** die Klappeneinrichtungen (18, 24, 26) elastisches Material umfassen.

9. Düse (14) nach einem der vorgehenden Ansprüche, **dadurch gekennzeichnet, dass** die Klappeneinrichtungen (18, 24, 26) durch Scharniereinrichtungen drehbar mit der festen Struktur verbindbar sind.

10. Düse (14) nach einem der vorgehenden Ansprüche, **dadurch gekennzeichnet, dass** sie ferner eine zwischen den ersten Klappeneinrichtungen (24) und den zweiten Klappeneinrichtungen (26) angeordnete Dichtung (36) zum Abdichten der Gleitflächen (22, 22') umfasst.

11. Düse (14) nach einem der vorgehenden Ansprüche, **dadurch gekennzeichnet, dass** die variable Abgasdüse (14) stromabwärts liegende Kanten (38, 38') umfasst, die eine gemeinsame Abgasdüsen-Stromabwärts-Kante (38") bilden, die in der zweiten Position gezahnt ist.

12. Düse (14) nach einem der vorgehenden Ansprüche, **dadurch gekennzeichnet, dass** eine stromabwärts liegende Kante (38‴) der den Bereich bildenden Abgasdüse (14) symmetrisch ist.

13. Flugzeug, umfassend eine variierbare Abgasdüse (14) nach Anspruch 1.

14. Verfahren zum Variieren einer variierbaren Abgasdüse (14) für ein Düsentriebwerk (1), umfassend folgende Schritte:
a) Bereitstellen einer Vielzahl von Klappeneinrichtungen (18),
b) Betätigen der Klappeneinrichtung (18) zum Variieren der Querschnittsfläche der Düsen (14) zwischen einer ersten Position und einer zweiten Position mittels Betätigungseinrichtungen (20, 32, 20h), wobei die Querschnittsfläche die Fläche innerhalb der Düse ist, die durch die Klappeneinrichtungen (18) definiert ist, wobei jedes Betätigungsmittel (20) zwei Gleitflächen (28, 30) umfasst, die winklig zueinander unter einem Winkel (a) angeordnet sind, und wobei der Querschnittsbereich sechseckig oder
fünfeckig und asymmetrisch oder
quadratisch, symmetrisch und mit gleichen Winkeln oder
rechteckig, symmetrisch und mit gleichen Winkeln oder
dreieckig, symmetrisch ist und gleiche Winkeln aufweist,
c) Bereitstellen eines kontinuierlichen Kontakts zwischen benachbarten Klappeneinrichtungen (18) über eine Gleitfläche (22, 22') jeweiliger erster Klappeneinrichtungen (18) während dem Variieren, so dass erste Klappeneinrichtungen (24) stets zwei benachbarte zweite Klappeneinrichtungen (26) überlagern.

15. Verfahren nach Anspruch 14, ferner umfassend den folgenden Schritt:
d) Betätigen erster Klappeneinrichtungen (24) der Klappeneinrichtungen (18) durch die Betätigungseinrichtungen (20), um das Variieren bereitzustellen.

16. Verfahren nach Anspruch 14 oder 15, ferner umfassend die folgenden Schritte:
e) Bereitstellen einer Innenfläche auf zweiten Klappeneinrichtungen (26),
f) Betätigen der zweiten Klappeneinrichtungen (26) durch eine entgegenwirkende Düsenstrahlkraft vom Düsentriebwerk (1) unter Verwendung.

17. Verfahren nach einem der Ansprüche 14 bis 16, wobei der Schritt b) durch die ersten Klappeneinrichtungen (24), die die zweiten Klappeneinrichtungen (26) überlagern, durchgeführt wird, wobei die ersten Klappeneinrichtungen (24) auf die zweiten Klappeneinrichtungen (26) einwirken.

## Revendications

1. Tuyère d'échappement variable (14) pour un moteur à réaction (1), comprenant une structure fixe (16), une pluralité de moyens de volet (18) disposés de manière circonférentielle autour et s'étendant le long d'un axe central de la structure fixe (16) et pouvant être reliés de manière pivotante à la structure fixe (16), et des moyens d'actionnement (20, 20h) étant agencés pour actionner lesdits moyens de volet (18) pour faire varier la zone de section transversale des tuyères (14) entre une première position et une deuxième position, la zone de section transversale étant la zone à l'intérieur de la tuyère définie par lesdits moyens de volet (18),
les moyens de volet respectifs (18) comprennent des premiers moyens de volet (24) et des deuxièmes moyens de volet (26) comprenant chacun une surface de coulissement (22, 22') agencée en contact continu avec des moyens de volet adjacents (18) pendant ladite variation, de telle sorte qu'un premier moyen de volet (24) recouvre toujours deux deuxièmes moyens de volet adjacents (26),
chaque moyen d'actionnement (20) comprend deux surfaces de coulissement (28, 30), qui sont agencées angulairement l'une par rapport à l'autre avec un angle (a),
**caractérisée en ce que** ladite zone de section transversale est
hexagonale ou
pentagonale et asymétrique, ou
carrée, symétrique et présente des angles égaux, ou
rectangulaire, symétrique et présente des angles égaux, ou
triangulaire, symétrique et présente des angles égaux.

2. Tuyère (14) selon la revendication 1, **caractérisée en ce qu'un** premier moyen de volet (24) est agencé pour être en contact continu avec un deuxième moyen de volet adjacent (26) de telle sorte que le premier moyen de volet (24), dans une zone définie par ladite surface de glissement (22, 22'), recouvre le deuxième moyen de volet (26).

3. Tuyère (14) selon la revendication 1 ou 2, **caractérisée en ce que** le premier moyen de volet (24) est constitué dudit moyen d'actionnement (20).

4. Tuyère (14) selon la revendication 1, **caractérisée en ce que** ledit angle (a) est environ 120°.

5. Tuyère (14) selon l'une quelconque des revendications précédentes, **caractérisée en ce que** le nombre des premiers moyens de volets (24) est égal au nombre des deuxièmes moyens de volets (26).

6. Tuyère (14) selon l'une quelconque des revendications précédentes, **caractérisée en ce que** le moyen d'actionnement (20) comprend un actionneur allongé (32).

7. Tuyère (14) selon la revendication 6, **caractérisée en ce que** l'actionneur allongé (32) est un hydraulique.

8. Tuyère (14) selon l'une quelconque des revendications précédentes, **caractérisée en ce que** les moyens de volets (18, 24, 26) comprennent un matériau élastique.

9. Tuyère (14) selon l'une quelconque des revendications précédentes, **caractérisée en ce que** lesdits moyens de volets (18, 24, 26) peuvent être reliés de manière pivotante à la structure fixe avec des moyens de charnière.

10. Tuyère (14) selon l'une quelconque des revendications précédentes, **caractérisée en ce qu'**elle comprend en outre un joint d'étanchéité (36) agencé entre les premiers moyens de volet (24) et les deuxièmes moyens de volet (26) pour sceller lesdites surfaces de glissement (22, 22').

11. Tuyère (14) selon l'une quelconque des revendications précédentes, **caractérisée en ce que** la tuyère d'échappement variable (14) comprend des bords aval (38, 38') qui forment un bord aval de tuyère d'échappement commun (38") qui est denté dans ledit deuxième position.

12. Tuyère (14) selon l'une quelconque des revendications précédentes, **caractérisée en ce qu'**un bord aval (38‴) de la tuyère d'échappement (14) formant ladite zone est symétrique.

13. Aéronef comprenant une tuyère d'échappement variable (14) selon la revendication 1.

14. Procédé pour faire varier une tuyère d'échappement variable (14) pour un moteur à réaction (1), comprenant les étapes :
a) fournir une pluralité de moyens de volet (18),
b) actionner lesdits moyens de volet (18) pour faire varier la section transversale des tuyères (14) entre une première position et une deuxième position par des moyens d'actionnement (20, 32, 20h), la zone de section transversale étant la zone à l'intérieur de la tuyère définie par lesdits moyens de volet (18), chaque moyen d'actionnement (20) comprenant deux surfaces de coulissement (28, 30) qui sont agencées angulairement l'une par rapport à l'autre avec un angle (a), et dans lequel ladite la zone de section transversale est
hexagonale ou
pentagonale et asymétrique, ou
carrée, symétrique et présente des angles égaux, ou
rectangulaire, symétrique et présente des angles égaux, ou
triangulaire, symétrique et présente des angles égaux,
c) fournir un contact continu entre des moyens de volet adjacents (18) par l'intermédiaire d'une surface de coulissement (22, 22') des moyens de volet respectifs (18) pendant ladite variation, de telle sorte qu'un premier moyen de volet (24) recouvre toujours deux deuxièmes moyens de volet adjacents (26).

15. Procédé selon la revendication 14, comprenant en outre l'étape :
d) actionner un premier moyen de volet (24) des moyens de volet (18) au moyen du moyen d'actionnement (20) pour fournir ladite variation.

16. Procédé selon la revendication 14 ou 15, comprenant en outre les étapes consistant à:
e) fournir une surface intérieure sur un deuxième moyen de volet (26),
f) actionner lesdits deuxièmes moyens de volet (26) au moyen d'une force de flux de jet antagoniste provenant du moteur à réaction (1) pendant l'utilisation.

17. Procédé selon l'une quelconque des revendications 14 à 16, dans lequel l'étape b) est exécutée par le premier moyen de rabat (24) qui recouvre le deuxième moyen de rabat (26), dans lequel les premiers moyens de rabat (24) agissent sur les deuxièmes moyens de volet (26).
